# EUROPEAN PATENT APPLICATION

(11) **EP 4 783 267 A1**
(43) Date of publication of application: **29.07.2026**
(21) Application number: 26152976.2
(22) Date of filing: 20.01.2026
(51) Int. Cl.: H01M 4/66

(54) **ELECTRODE PLATE AND RECHARGEABLE BATTERY INCLUDING THE SAME**

(30) Priority: 23.01.2025 KR 20250010588
(71) Applicant: SAMSUNG SDI CO., LTD., Yongin-si, Gyeonggi-do 17084 (KR)
(72) Inventor: KIM, Junsik, Yongsin-si, Gyeonggi-do 17084 (KR); LEE, Chonghoon, Yongsin-si, Gyeonggi-do 17084 (KR)
(74) Representative: Michalski Hüttermann & Partner mbB

(57) **Abstract**

An electrode plate according to an example embodiment may include an electrode plate including a substrate including a base layer and a first conductive layer and a second conductive layer disposed on upper and lower surfaces of the base layer, and an active material layer disposed on at least one surface of the substrate. The substrate includes a connector including a conductive material, the connector penetrating the first conductive layer, the base layer, and the second conductive layer, and connecting the first conductive layer and the second conductive layer. The substrate further includes a penetrator penetrating the connector.

## Description

### BACKGROUND

### (a) Field of the Disclosure

The present disclosure relates to an electrode plate, and a rechargeable battery including the electrode plate.

### (b) Description of the Related Art

Rechargeable batteries may be manufactured in various shapes. Among these various shapes, pouch batteries may include an electrode assembly with a separator, an insulator, between a positive electrode plate and a negative electrode plate, and a thin flexible pouch with the electrode assembly built in. For example, the pouch may accommodate the electrode assembly in the inner space.

The electrode assembly of the rechargeable battery may be largely divided into a winding type and a stacking type depending on the structure thereof. The stacking type may have sufficient structural safety and desired or improved spatial utility, so the stacking type may be widely applied to small and medium-to-large sizes. The stacking type rechargeable battery may be or include a stack of electrode plates and separators.

The substrate applied to the electrodes of the rechargeable battery, that is, the positive electrode and the negative electrode, may usually be a thin film of electrical conductivity such as, e.g., copper, aluminum, Ni, or stainless steel (SUS). For example, in the case of a commercially available lithium ion battery, a copper foil substrate may constitute the negative electrode, and an aluminum foil substrate may constitute the positive electrode

In order to lower manufacturing costs and reduce weights of the rechargeable batteries, the entire substrate may not be manufactured of or include copper or aluminum, but the substrate with a metal layer applied to both sides of resin may also be applied.

The resin metal composite substrate may have metal layers disposed on both surfaces of a resin sheet, and the resin has a low conductivity so the metal layers on both the surfaces do not conduct with each other. Accordingly, to manufacture the rechargeable battery with a resin metal composite substrate, a conducting process for folding foils and inserting each of the foils into gaps of the electrode plates must be performed so that the upper surface and the lower surface of the resin metal composite substrate may be electrically connected to each other. Hence, manufacturing time and cost may be increased.

### SUMMARY

The present disclosure describes an electrode plate for conducting an upper-surface metal layer and a lower-surface metal layer, and a rechargeable battery including the electrode plate.

Technical objects of the present disclosure are not limited by the above-described technical object, and the technical objects that are described are clearly understood by a person of ordinary skill in the art.

An example embodiment of the present disclosure includes an electrode plate including a substrate including a base layer and a first conductive layer and a second conductive layer disposed on upper and lower surfaces of the base layer, and an active material layer disposed on at least one surface of the substrate. The substrate includes a connector made of or including a conductive material, the connector penetrating the first conductive layer, the base layer, and the second conductive layer, and connecting the first conductive layer and the second conductive layer. The substrate further includes a penetrator penetrating the connector.

A cross-section, or vertical cross-section, of the base layer may have a wave shape.

The penetrator may have one of a circular shape and a polygonal shape.

The connector and the penetrator may be or include multiple connectors and multiple penetrators, and the penetrators may be spaced apart from each other at regular intervals.

A distance between the adjacent penetrators from among the penetrators may be greater than about 200 µm.

The penetrators may be arranged in the shape of one of a triangular lattice, a quadrangular lattice, and a rhombus lattice.

The base layer may include at least one of polyethylene terephthalate, poly amide, poly imide, poly butylene terephthalate, polyethylene naphthalate, poly carbonate, polyethylene, polypropylene, polyethylene propylene, acrylo nitrile-butadiene-styrene copolymer, poly vinyl alcohol, poly styrene, poly chloride vinyl, poly vinylidene fluoride, poly tetra fluoro ethylene, poly styrene sulfonate sodium, poly acetylene, silicon rubber, poly oxy methylene, poly phenylene ether, poly phenylene sulfide, polyethylene glycol, poly sulfur nitride, poly phenylene, polypyrrole, poly aniline, polythiophene, polypyridine, cellulose, fluorine, starch, protein, epoxy resin, phenol resin, derivatives of the above-noted materials, crosslinked bodies of the above-noted materials, and copolymers of the above-noted materials.

The base layer may further include an additive, and the additive may include at least one of a metal material and an inorganic nonmetal material.

The first conductive layer and the second conductive layer may include at least one of aluminum, nickel, copper, iron, silver, stainless, and alloys thereof.

The first conductive layer and the second conductive layer may further include a carbon-based conductive material.

The connector may be made of or include a same material as at least one of the first conductive layer and the second conductive layer.

The connector, the first conductive layer, and the second conductive layer may be made of or include the same material.

Thicknesses of the first conductive layer and the second conductive layer may be in the range of about 0.5 µm to about 1.0 µm.

The thickness of the base layer may be greater than about 50% of the thickness of the substrate.

A width of an inside of the penetrator may be in the range of about 40 µm to about 60 µm.

The thickness of the connector may be different from the thicknesses of the first conductive layer and of the second conductive layer.

The first conductive layer, the second conductive layer, and the connector may have the same thickness.

The substrate may further include a junction layer disposed at least one of between the base layer and the first conductive layer, and between the base layer and the second conductive layer.

Another example embodiment of the present disclosure includes a rechargeable battery including an electrode assembly and a case receiving the electrode assembly.

According to examples of the present disclosure, the first conductive layer and the second conductive layer of the substrate of the electrode plate included in the electrode assembly are electrically connected by the connector. Hence, when one substrate tab is combined to one of the upper surface and the lower surface of the substrate, and the substrate tabs are connected to each other, conduction of the electrode plates may be achieved.

In this way, the electrode assembly according to an example embodiment may not need to perform an electrical conducting process that requires additional folding of foils and inserting them one by one between electrode plates as in prior art. The manufacturing time may be shortened and the manufacturing cost may also be reduced.

The volume energy density of the rechargeable battery may be increased, the weight thereof may be reduced, and safety may be reduced.

### BRIEF DESCRIPTION OF THE DRAWINGS

The following drawings appended to the specification illustrate example embodiments of the present disclosure to describe a technical concept of the present disclosure so as to be understood readily together with detailed descriptions of the present disclosure, so the present disclosure should not be meant to restrict the disclosure to the matters illustrated in the accompanying drawings.
FIG. 1 illustrates a perspective view on a rechargeable battery including an electrode plate, according to an example embodiment.
FIG. 2 illustrates a perspective view on an electrode plate, according to an example embodiment.
FIG. 3 illustrates a cross-sectional view with respect to a line **III-III'** on the electrode plate of FIG. 2.
FIG. 4 illustrates a cross-sectional view on a substrate on the electrode plate of FIG. 3.
FIG. 5 illustrates a top plan view on a substrate of the electrode plate of FIG. 3.
FIG. 6 illustrates a top plan view on substrates including a penetrator having various arrangement forms.
FIG. 7 illustrates a cross-sectional view on a substrate according to a modified example.
FIG. 8 illustrates a cross-sectional view on a substrate according to a modified example.
FIG. 9 illustrates a cross-sectional view on a substrate according to a comparative example 1.
FIG. 10 illustrates a cross-sectional view on a substrate according to a comparative example 2.
FIG. 11 illustrates a graph on measured resistance with respect to charge depths of a rechargeable battery manufactured using substrates of an example embodiment, a comparative example 1, and a comparative example 2.
FIG. 12 illustrates a cross-sectional view on a moving path of lithium ions on an electrode plate of FIG. 3.
FIG. 13 illustrates a graph on measured capacity with respect to current rates of a rechargeable battery manufactured using substrates of an example embodiment, a comparative example 1, and a comparative example 2.
FIG. 14 illustrates a graph on measured capacity ratios with respect to charge and discharge cycle numbers of a rechargeable battery manufactured using substrates of an example embodiment, a comparative example 1, and a comparative example 2.

### DETAILED DESCRIPTION

Hereinafter, example embodiments of the present disclosure are described in detail with reference to the accompanying drawings. Terms or words used in the present specification and claims, which are described below, should not be interpreted as being limited to typical or dictionary meanings, but should be interpreted as having meanings and concepts which comply with the technical features of the present disclosure, based on the principle that an inventor can appropriately define the concept of the terms to describe his/her own disclosure in the best manner. Therefore, configurations illustrated in the example embodiments and the drawings described in the present specification are only an example embodiment of the present disclosure and do not represent the entirety of the technical features of the present disclosure, and thus it is to be understood that various equivalents and modified examples, which may replace the configurations, are possible when filing the present application.

When used in the present specification, "comprise and include" and/or "comprising and including" may specify the existence of the mentioned shapes, numbers, steps, operations, members, elements and/or these groups, and may not exclude the presence or addition of one or more other shapes, numbers, movements, members, elements and/or groups.

To aid in understanding of the disclosure, the attached drawings may not be drawn to actual scale, but the dimensions of some components may be exaggerated. The same reference number may be assigned to the same component in other example embodiments.

The statement that two objects of comparison are 'the same' may mean 'substantially the same.' Therefore, the substantial sameness may include a case, for example, where the deviation is within 5%, which is considered low in the industry. Uniformity of a parameter in a given region may mean substantial uniformity, or uniformity from an average perspective.

Although first, second, and the like, describe various components, the components may not be limited by these terms. These terms are only used to distinguish one component from another, and unless specifically stated to the contrary, the first component may also be the second component.

Throughout the specification, unless otherwise stated, each component may be singular or plural.

The placement of any components on a "upper portion (or a lower portion)" of a component or the "top (or bottom)" of a component may mean that any component is placed in contact with the top (or bottom) of the component. This may mean that other configurations may be interposed between and any configuration placed on (or under) the component.

It should be understood that when a component is described as "connected to" or "coupled to" another component, the components may be directly connected or accessed to each other, but other components may be "interposed" between the respective components, or the respective components may be connected, combined, or accessed to each other through other components.

As used herein, the term "and/or" includes any and all combinations of one or more of the associated listed items. The use of "may" when describing example embodiments of the present disclosure refers to "one or more example embodiments" of the present disclosure. Expressions such as "one or more" in front of a list of elements may modify the entire list of elements and may not modify individual elements of the list.

When "A and/or B" is used throughout the specification, the expression may mean A, B, or "A and B" unless there is a special opposing statement, and when "C to D" is used, the expression may mean that a value is higher than or equal to C and lower than or equal to D unless there is a special opposing statement.

When a syntax such as "at least one of A, B and C", "at least one of A, B or C", "at least one of A, B and C group" and "at least one of A, B and C" is used to specify a list of elements A, B and C, the syntax may refer to any and all suitable combinations.

The term "use" may be considered synonymous with the term "utilize." As used in the present specification, "substantially," "approximately," and similar terms may be used as terms of approximation rather than terms of degree, taking into account inherent variations in measured or calculated values as would be recognized by a person of ordinary skill in the art.

In the present specification, the terms first, second, third, and the like, may describe various elements, components, regions, layers and/or sections, but the elements, components, regions, layers and/or sections may not be limited by these terms. The terms may be used to distinguish one element, component, region, drawing layer or cross-section from another element, component, region, drawing layer or cross-section. Hence, the first element, component, region, layer or section discussed below may be named a second element, component, region, layer or section without departing from the teachings of the example embodiments.

As illustrated in the drawings, to describe the relationship between one element or feature and other element(s) or feature(s), for ease of description, spatial relative terms such as beneath, below, lower, above, upper, and the like, may be used in the present specification. Spatially relative dispositions are understood to encompass different directions of the device in use or operation in addition to the direction depicted in the figures. For example, when the drawing device is flipped, an element described as "below" or "bottom" another element may be understood to be "above" or "beyond" another element. Therefore, the term "down" may encompass both upward and downward directions.

The terms used in this specification are intended to describe embodiments of the present disclosure and are not intended to limit the present disclosure.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

A rechargeable battery including an electrode plate is described in detail with reference to accompanying drawings prior to describing an electrode plate according to an example embodiment.

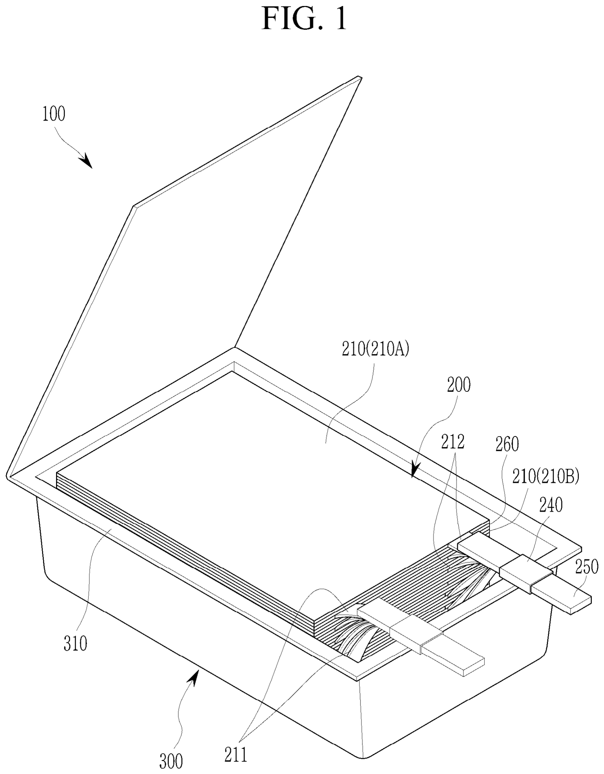

FIG. 1 illustrates a perspective view on a rechargeable battery including an electrode plate according to an example embodiment.

Referring to FIG. 1, the rechargeable battery 100 may include an electrode assembly 200 and a case 300.

The electrode assembly 200 may include an electrode plates 210 and a separator 260. In detail, the electrode plates 210 may include a first electrode plate 210A and a second electrode plate 210B.

The electrode assembly 200 may have a configuration of repeatedly winding or stacking a laminate including the first electrode plate 210A, the second electrode plate 210B, and the separator 260.

For example, the electrode assembly 200 may be or include a stacking type in which the electrodes are arranged as multiple layers. In another example, the electrode assembly 200 may be or include a repeatedly wound jelly-roll type. The present disclosure describes the electrode assembly 200 in a stacking type.

The first electrode plates 210A may be connected to each other, and the second electrode plates 210B may be connected to each other.

To this end, substrate tabs 211 and 212 may connect the respective first electrode plates 210A and the second electrode plates 210B. The substrate tab connecting the first electrode plates 210A may be the first substrate tab 212. The substrate tab connecting the second electrode plates 210B may be the second substrate tab 211.

The first substrate tabs 212 may be disposed in parallel to each other in a direction, e.g., a vertical direction, the second substrate tabs 211 may be disposed in parallel to each other in the direction, e.g., the vertical direction, and the first substrate tabs 212 and the second substrate tabs 211 may be disposed at regular intervals in another direction, e.g., a horizontal direction.

The above-noted substrate tabs may be combined to one surface of the electrode plate 210. In detail, the first substrate tab 212 and the second substrate tab 211 may be combined to the electrode plate 210 by, e.g., welding. For example, uncoated regions A2 may be gathered together and may be combined to each other by a welding method such as, e.g., laser beams, resistance welding, and ultrasonic welding.

The conventional electrode plate including a resin metal composite substrate must connect the substrate tab to the upper metal layer and the lower metal layer so as to connect the upper metal layer to the lower metal layer.

In examples, the rechargeable battery 100 including an electrode plate 210 according to an example embodiment may be manufactured by combining the substrate tabs 211 and 212 to one surface of the electrode plate 210. A detailed description on the electrode plate 210 is described below.

The separator 260 may be disposed between the first electrode plate 210A and the second electrode plate 210B. The separator 260 may reduce or prevent short-circuit of the first electrode plate 210A and the second electrode plate 210B, and may allow movement of lithium ions. For this purpose, the separator 260 may be relatively larger than the first electrode plate 210A and the second electrode plate 210B.

The separator 260 may be made of or include, for example, at least one of polyethylene, polypropylene, and a composite film of polyethylene and polypropylene, and the separator 260 is not limited thereto.

The separator 260 may be incised by a unit length and may be arranged between the first electrode plate 210A and the second electrode plate 210B, or one separator 260 in a ribbon shape may be alternately arranged between the first electrode plate 210A and the second electrode plate 210B. Differing from this, the separator 260 may be installed to be wound in one direction between the first electrode plate 210A and the second electrode plate 210B.

The arrangement of the separator 260 may not be limited to specific forms, and the present example embodiment describes the separator 260 being incised by a unit length and arranged between the first electrode plate 210A and the second electrode plate 210B.

The case 300 may receive the electrode assembly 200. The electrode assembly 200 is received into the case 300 together with the electrolyte.

The case 300 may be one of a pouch type, a cylindrical type, and an angular type. External members in a planar shape may be bent to face each other, and the pouch-type case 300 may be manufactured to press or draw a surface and include a recess in the surface (not shown).

The electrode assembly 200 may be received in the recess (not shown). A sealing portion 310 may be provided on an exterior circumference of the recess, and the sealing portion 310 may be sealed by a method such as thermal fusion while the electrode assembly 200 is received in the recess.

Regarding the electrode plates 210, the first electrode plate 210A may be or include a negative electrode, and the second electrode plate 210B may be or include a positive electrode, and vice versa. The first electrode plate 210A and the second electrode plate 210B may be electrically connected to an outside of the rechargeable battery 100 through a strip terminal 250.

An insulation tape 240 may be attached to a portion of the strip terminal 250 that contacts the case 300. The insulation tape 240 may reduce or prevent the strip terminal 250 from being electrically connected to the case 300.

The electrode plate 210 according to an example embodiment is described in detail with references to the drawings discussed below.

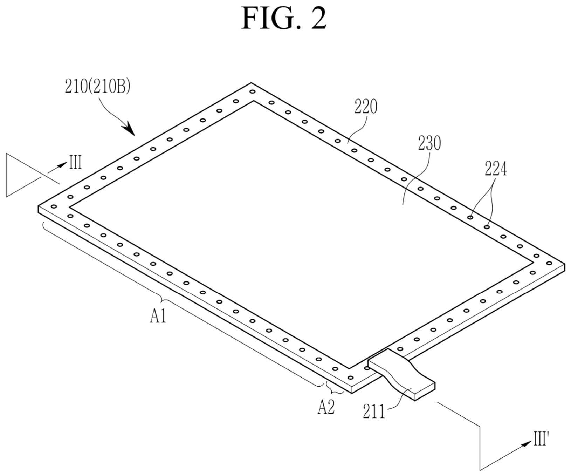

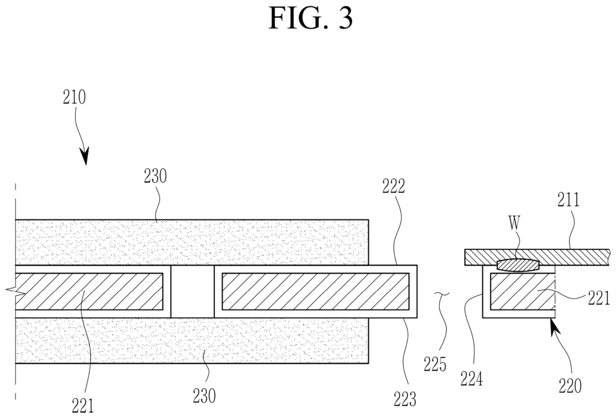

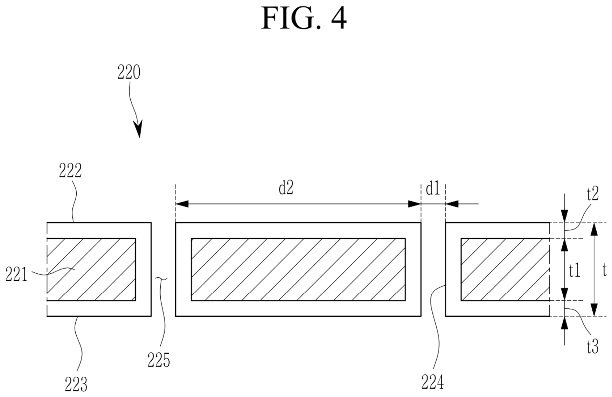

FIG. 2 illustrates a perspective view on an electrode plate according to an example embodiment, FIG. 3 illustrates a cross-sectional view with respect to a line III-III' on an electrode plate of FIG. 2, and FIG. 4 illustrates a cross-sectional view on a substrate on an electrode plate of FIG. 3. Herein, FIG. 2 is a simplified schematic diagram of the electrode plate to describe the arrangement of the substrate and an active material layer, and a structure of the electrode plate may not be limited to what is illustrated in FIG. 2.

Referring to FIG. 2 to FIG. 4, the electrode plate 210 may include a substrate 220 and an active material layer 230.

The substrate 220 may transmit electrons to the active material from the outside, or may emit electrons from the active material so that an electrochemical reaction may be generated when the secondary battery 100 is charged or discharged.

The active material layer 230 may be disposed on at least one surface of the substrate 220. The active material layer 230 may be coated on one of an upper surface and a lower surface of the substrate 220 with respect to directions illustrated in the drawing, or may be coated on the upper surface and the lower surface thereof. The active material layer 230 may be configured as an active material, a conductive material, and a binder in the electrode plate of the general rechargeable battery, so no detailed description thereof is provided.

The substrate 220 may include a base layer 221, and a first conductive layer 222 and a second conductive layer 223 disposed on respective upper and lower surfaces of the base layer 221 with reference to the internal structure.

The base layer 221 may include at least one of polyethylene terephthalate, poly amide, poly imide, poly butylene terephthalate, polyethylene naphthalate, poly carbonate, polyethylene, polypropylene, polyethylene propylene, acrylo nitrile-butadiene-styrene copolymer, poly vinyl alcohol, poly styrene, poly chloride vinyl, poly vinylidene fluoride, poly tetra fluoro ethylene, poly styrene sulfonate sodium, poly acetylene, silicon rubber, poly oxy methylene, poly phenylene ether, poly phenylene sulfide, polyethylene glycol, poly sulfur nitride, poly phenylene, polypyrrole, poly aniline, polythiophene, polypyridine, cellulose, fluorine, starch, protein, epoxy resin, phenol resin, derivatives of the above-noted materials, crosslinked bodies of the above-noted materials, and copolymers of the above-noted materials.

The base layer 221 may further include an additive. The additive may include at least one of a metal material and an inorganic nonmetal material.

For example, the metal material additive may be or include at least one of aluminum, aluminum alloy, copper, copper alloy, nickel, nickel alloy, titanium, titanium alloy, iron, iron alloy, silver, and silver alloy.

The inorganic nonmetal material additive may be or include, for example, at least one of carbon-based material, aluminum oxide, silicon dioxide, silicon nitride, silicon carbide, boron nitride, silicate, and titanium oxide, and for example, the inorganic nonmetal material additive may be or include at least one of a glass material, a ceramic material, and a ceramic composite material. The carbon-based material additive may, for example, include at least one of graphite, superconducting carbon, acetylene black, carbon black, Ketjen black, carbon dots, carbon nanotubes, graphene, and carbon nanofibers, and is not limited thereto.

The additive may further include a carbon-based material coated by a metal material. For example, the additive may be or include at least one of graphite powder coated by nickel and carbon fiber coated by nickel.

For example, a thickness t1 of the base layer 221 may be greater than 50% of a thickness t of the substrate 220. When the thickness t1 of the base layer 221 is less than 50% of the thickness t of the substrate 220, rigidity of the substrate 220 may be reduced.

The first conductive layer 222 and the second conductive layer 223 may be disposed on the respective upper and lower surfaces of the base layer 221. The material of the first conductive layer 222 and the second conductive layer 223 may include at least one of, for example, aluminum, nickel, copper, iron, silver, stainless, and alloys thereof.

A method for coating the first conductive layer 222 and the second conductive layer 223 on the substrate 220 may include, for example, deposition, electrolytic plating, and lamination methods, and the method is not limited thereto.

The first conductive layer 222 and the second conductive layer 223 may further include a carbon-based conductive material. The carbon-based conductive material may, for example, include at least one of graphite, superconducting carbon, acetylene black, carbon black, Ketjen black, carbon dots, carbon nanotubes, graphene, and carbon nanofibers, and is not limited thereto.

The carbon-based conductive material may increase rigidity and conductivity of the first conductive layer 222 and the second conductive layer 223.

Regarding the substrate 220, the substrate 220 may include, for example, a connector 224 and a penetrator 225.

The connector 224 may be made of or include a conductive material. The connector 224 may penetrate the first conductive layer 222, the base layer 221, and the second conductive layer 223, and may connect the first conductive layer 222 to the second conductive layer 223. To this end, with reference to the direction illustrated in the drawing, an upper end of the connector 224 may be connected to the first conductive layer 222, and a lower end thereof may be connected to the second conductive layer 223.

The method for generating the connector 224 on the substrate 220 may include, for example, a metal thin film deposition method, and is not limited thereto.

The connector 224 may be made of or include a same material as at least one of the first conductive layer 222 and the second conductive layer 223. In an example, the connector 224, the first conductive layer 222, and the second conductive layer 223 may be made of or include the same material.

The thicknesses t2 and t3 of the first conductive layer 222 and the second conductive layer 223 may be included in the range of about 0.5 µm to about 1.0 µm. When the thicknesses t2 and t3 of the first conductive layer 222 and the second conductive layer 223 are less than about 0.5 µm, conductivity of the first conductive layer 222 and the second conductive layer 223 may be reduced and the first conductive layer 222 and the second conductive layer 223 may be damaged by external impacts.

In an example, when the thicknesses t2 and t3 of the first conductive layer 222 and the second conductive layer 223 are greater than about 1.0 µm, the thickness t of the substrate 220 may substantially or excessively increase and the thickness of the rechargeable battery 100 may also increase.

The first conductive layer 222, the second conductive layer 223, and the connector 224 may have the same thickness. In an example, the thickness of the connector 224 may be different from the thicknesses of the first conductive layer 222 and of the second conductive layer 223.

The penetrator 225 may penetrate the connector 224. The penetrator 225 may penetrate a center of the connector 224 in a direction, e.g., a vertical direction. An electrolyte filled in the case 300 may be filled in the penetrator 225. A detailed description on the shape and numerical value of the penetrator 225 is described below.

The connector 224 and the penetrator 225 may be multiple, and the respective penetrators 225 may be spaced at regular intervals. A distance d2 of adjacent penetrators 225 from among the penetrators 225 may be, e.g., greater than about 200 µm.

A width d1 of the inside of the penetrator 225 may be included in the range of about 40 µm to about 60 µm. When the width d1 of the inside of the penetrator 225 is less than about 40 µm, movement of the electrolyte may be limited. When the width d1 of the inside of the penetrator 225 is greater than about 60 µm, slurry may be input into the penetrator 225 during a slurry coating process.

When the substrate 220 is distinguished by regions, the substrate 220 may include a coated region A1 and an uncoated region A2, as illustrated in FIG. 1.

The coated region A1 may be a region with at least one surface on which the active material layer 230 is applied. The active material layer 230 may be applied to portions excluding an edge region of the substrate 220.

The uncoated region A2 may be disposed on the outside or edge region of the active material layer 230 on the substrate 220. For example, the edge region of the substrate 220 may be the uncoated region A2 in which the active material layer 230 is not applied. The substrate tab may be combined to the uncoated region A2 disposed in one of the upper surface or the lower surface of the substrate 220. In detail, the substrate tabs 211 and 212 may be combined to the upper surface of the uncoated region A2 with reference to the direction illustrated in the drawing, and are not limited thereto.

As illustrated in FIG. 3, when one substrate tab 211 is combined to the upper surface of the uncoated region A2, a welding portion (W) generated by welding may be generated between the substrate tab 211 and the first conductive layer 222. The first conductive layer 222 and the second conductive layer 223 are electrically connected by the connector 224 so one substrate tab 211 may be electrically connected with the first conductive layer 222 and the second conductive layer 223.

Regarding the conventional rechargeable battery including a resin metal composite substrate, the upper metal layer and the lower metal layer of the substrate may not be connected to each other. Hence, a manufacturing time and a manufacturing process may be increased as a process for conducting metal layers to weld the uncoated region of the electrode must be performed.

However, regarding the electrode plate 210, the first conductive layer 222 and the second conductive layer 223 may be electrically connected by the connector 224. Therefore, when one substrate tab 211 (see FIG. 2) is combined to one of the upper surface or the lower surface of the substrate 220, and the substrate tabs 211 (see FIG. 1) are connected to each other, electrically connecting the electrode plates 210 may be completed.

Hence, volume energy density of the rechargeable battery 100 may be increased, the weight thereof may be reduced, and safety may be increased.

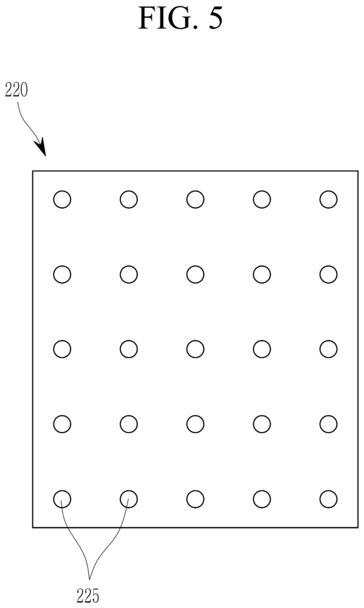

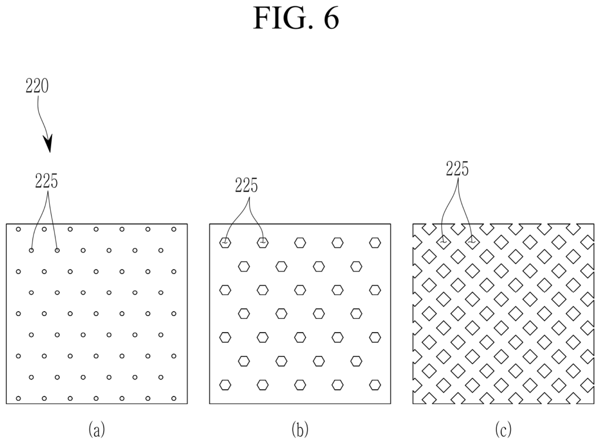

FIG. 5 illustrates a top plan view on a substrate of an electrode plate of FIG. 3, and FIG. 6 illustrates a top plan view on substrates including a penetrator having various arrangement forms.

Referring to FIG. 5 and FIG. 6, the penetrators 225 may be arranged in the shape of one of a triangular lattice, a quadrangular lattice, and a rhombus lattice. The shape of the penetrator 225 may be one of a circular shape and a polygonal shape.

For example, referring to FIG. 5, the penetrator 225 may be arranged in a quadrangular lattice shape, and the penetrator 225 may have a circular shape.

As illustrated in FIG. 6 (a), the penetrator 225 may be arranged in a triangular lattice shape, and the penetrator 225 may have a circular shape. As illustrated in FIG. 6 (b), the penetrator 225 may be arranged in a triangular lattice shape, and the penetrator 225 may have a hexagonal shape.

As illustrated in FIG. 6 (c), the penetrator 225 may be arranged in a rhombus lattice shape, and the penetrator 225 may have a quadrangular shape. The arrangement shape of the penetrator 225 and the shape of the penetrator 225 may not be limited to the above-noted combinations, and various other types of combinations are allowable.

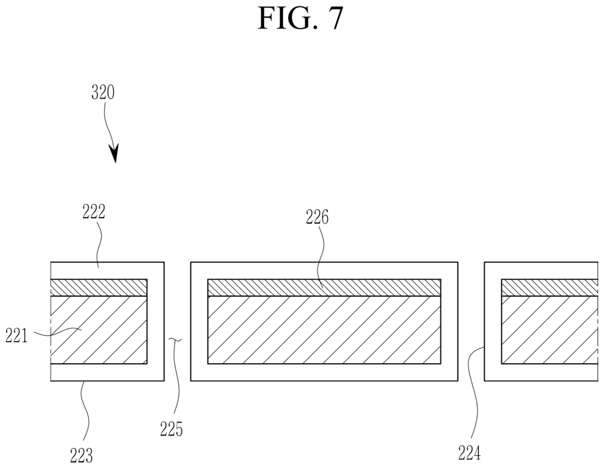

FIG. 7 illustrates a cross-sectional view of a substrate according to a modified example.

Referring to FIG. 7, the substrate 320 may further include a junction layer 226 as a modified example.

The junction layer 226 may be disposed at least one of between the base layer 221 and the first conductive layer 222 as illustrated in FIG. 7, and between the base layer 221 and the second conductive layer 223. The junction layer 226 may increase adhesiveness of the base layer 221 to the first conductive layer 222, and adhesiveness of the base layer 221 to the second conductive layer 223. Hence, the first conductive layer 222 and the second conductive layer 223 may be substantially prevented from delaminating from the base layer 221.

The junction layer 226 may be or include, for example, a conductive polymer junction layer. The conductive polymer junction layer may include, for example, at least one of polypyrrole (PPy), polyaniline (PANi), 3,4-polyethylene dioxythiophene (PEDOT), polyallylamine hydrochloride (PAH), polystyrene sulfonate (PSS), polyacrylic acid (PAA), and polydiallyl dimethyl ammonium (PDADMA).

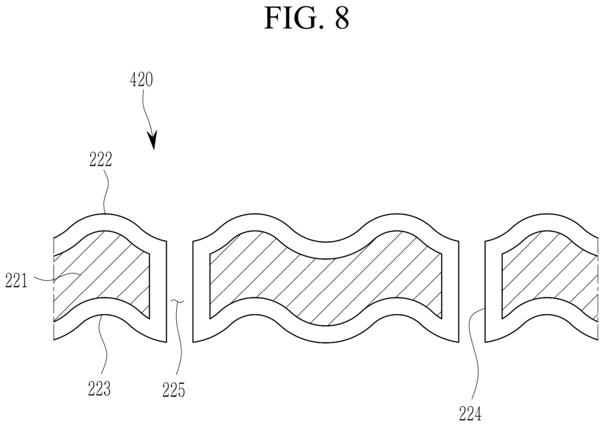

FIG. 8 illustrates a cross-sectional view of a substrate according to a modified example.

Referring to FIG. 8, regarding the substrate 420, as another modified example, the cross-section, or vertical cross-section, of the base layer 221 may have a wave shape. A contact area of the substrate 420 with the active material layer 230 may increase, thereby reducing contact resistance and increasing a bonding force with the active material layer 230.

Returning to FIG. 1, the electrode plate 210 may be repeatedly stacked, and the substrate tab may be welded in the uncoated region A2 of one side of the substrate 220. The respective substrate tabs may be connected to the strip terminal 250.

In the case of manufacturing the rechargeable battery 100 made with the electrode plate 210, there may not be a need to perform a conducting process for additionally folding a foil and inserting the same between the electrode plates 210 one by one, as in conventional systems. Therefore, the manufacturing time and the production cost of the rechargeable battery 100 may be reduced.

The rechargeable battery 100 manufactured with the electrode plate 210 may reduce resistance and may improve charge and discharge characteristics, compared to the conventional rechargeable battery 100 including the resin metal composite substrate 220.

The above-noted effect may be confirmed by an experiment given below. The experiment represents measurement of resistance caused by charge depths of the rechargeable batteries 100, G1, and G2 manufactured using the substrate 220 of the example embodiment, the comparative example 1 and the comparative example 2, capacity with respect to current rates, and capacity ratios (%) with respect to charge and discharge cycle numbers. The respective rechargeable batteries 100, G1, and G2 may be lithium ion batteries with the capacity of 5Ah using a lithium cobalt oxide (LCO) positive electrode and a graphite negative electrode.

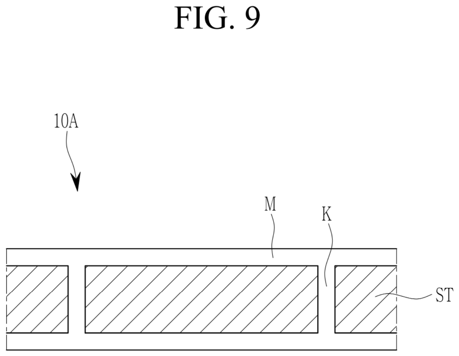

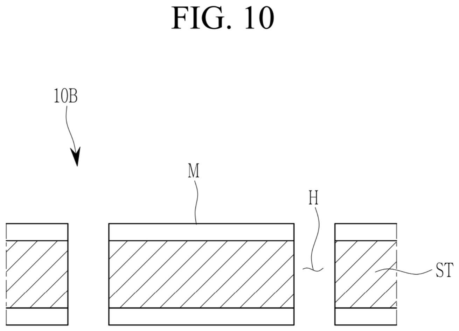

The substrate according to embodiment may be included in the electrode plate illustrated in FIG. 3. The substrate according to the comparative example 1 may be the substrate 10A illustrated in FIG. 9, and the substrate according to the comparative example 2 may be the substrate 10B illustrated in FIG. 10.

Regarding a substrate 10A illustrated in FIG. 9, a metal layer M may be coated on upper and lower surfaces of a base layer ST, and the metal layer M may be electrically connected to a conductor K. Regarding a substrate 10B illustrated in FIG. 10, the metal layer M may be coated on the upper and lower surfaces of the base layer ST, and a penetration hole H may penetrate the metal layer M and the base layer ST.

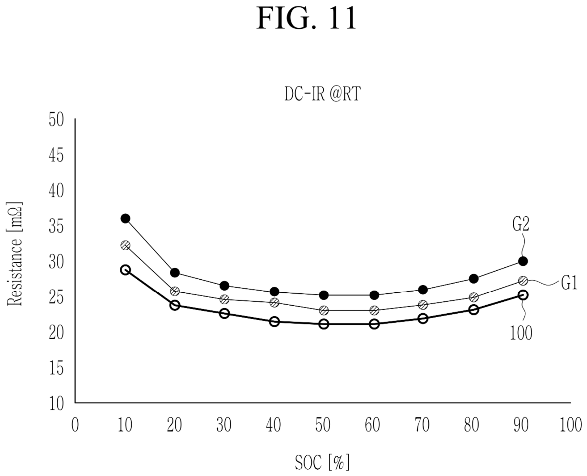

FIG. 11 is a graph illustrating measured resistance with respect to charge depths of a rechargeable battery manufactured using substrates of the example embodiment, the comparative example 1, and the comparative example 2.

Referring to FIG. 11, regarding resistance of the rechargeable batteries 100, G1, and G2 to which the substrate of the example embodiment, the comparative example 1, and the comparative example 2 is applied with respect to charge depths, it is found that the rechargeable battery 100 according to an example embodiment has a low resistance characteristic.

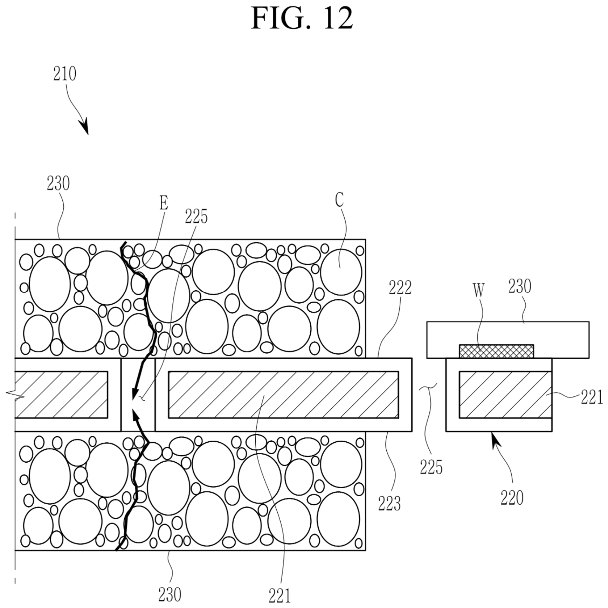

When the substrate 220 (see FIG. 4) included in the electrode plate of the rechargeable battery 100 according to an example embodiment is electrically uniformly connected, and the rechargeable battery 100 (see FIG. 1) is assembled as illustrated in FIG. 12, the electrolyte (not shown) may be filled in the penetrator 225.

Impregnation of the electrolyte through the penetrator may be improved, and a uniform electrochemical reaction may be generated from the active material layers 230 disposed on respective surfaces of the substrate 220. Therefore, a moving path E of lithium ions may be symmetrically shown on the active material layer 230 disposed on respective surfaces of the substrate 220. For example, the lithium ions may be further freely moved in comparison to the electrode plate to which the conventional substrate is applied.

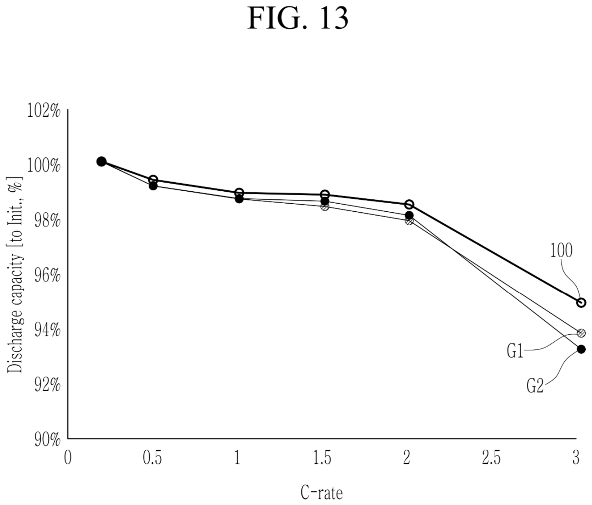

FIG. 13 is a graph illustrating measured capacity with respect to current rates of a rechargeable battery manufactured using substrates of an example embodiment, a comparative example 1, and a comparative example 2.

Referring to FIG. 13, regarding the capacity of the rechargeable batteries 100, G1, and G2 to which the substrate of the example embodiment, the comparative example 1, and the comparative example 2 is applied with respect to the current rates, the respective rechargeable batteries do not have large differences at the low rates of 0.2C and 0.5C. At the high rate of 1.5C or more, the rechargeable battery 100 according to an example embodiment has desired or improved discharge characteristics.

This may be because the substrate 220 (see FIG. 4) included in the electrode plate of the rechargeable battery 100 according to an example embodiment may be electrically uniformly connected, the impregnation of electrolyte through the penetration hole is improved, and a substantially uniform electrochemical reaction is performed.

The 1C in this case may represent maintaining one hour when capacity of the rechargeable battery is 1000mAh, and it is discharged by 1A (self-capacity), and being discharged with 10A which is ten times the same when discharged with 10C.

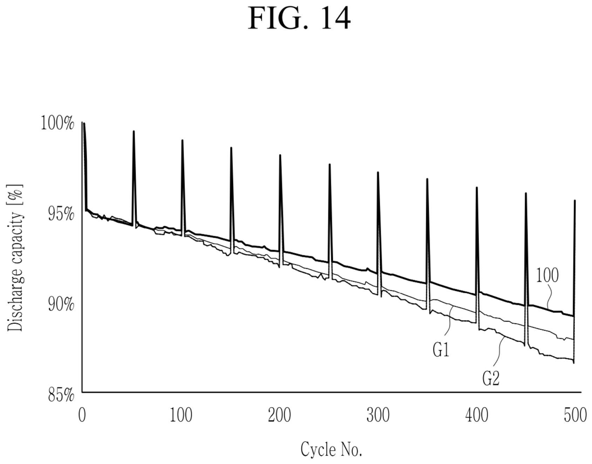

FIG. 14 is a graph illustrating measured capacity ratios with respect to charge and discharge cycle numbers of a rechargeable battery manufactured using substrates of an example embodiment, a comparative example 1, and a comparative example 2.

Referring to FIG. 14, when examining the capacity ratio (%) according to the number of charge/discharge cycles of each of the rechargeable batteries 100, G1, and G2 to which the substrates of the example embodiment, the comparative example 1, and the comparative example 2 are applied, the rechargeable battery 100 according to the example embodiment exhibits the best lifespan characteristic. The rechargeable batteries G1 and G2 according to the comparative example 1 and the comparative example 2 show similar life-span characteristics to the rechargeable battery 100 according to the example embodiment for the initial 100 cycles, and the rechargeable battery G2 according to the comparative example 2 exhibits the lowest capacity retention rate as additional life-span evaluation is conducted.

When the rechargeable batteries 100, G1, and G2 are charged and discharged for 500 cycles, and they are disassembled and analyzed, it may be inferred that portions of the base layer ST (see FIG. 10) and the metal layer M (see FIG. 10) are separated from each other on the substrate 10B (see FIG. 10) of the rechargeable battery G2 according to the example embodiment 2 and the bonding force between the two layers is low so their life-span characteristics are deteriorated.

As described above, the rechargeable battery 100 to which the substrate according to an example embodiment is applied is found to be desired or improved in terms of resistance according to charge depth, capacity according to current rate, and capacity ratio (%) according to the number of charging and discharging cycles.

The accompanying drawings and the example embodiments of the present disclosure are only examples of the present disclosure, and describe the present disclosure but do not limit the scope of the present disclosure as defined by the following claims. It is understood by those of ordinary skill in the art that various modifications and equivalent example embodiments may be made. Therefore, the technical scope of the present disclosure may be defined by the technical idea of the following claims.

### Description of symbols:

| | | | |
|---|---|---|---|
| 100: | rechargeable battery | 200: | electrode assembly |
| 210: | electrode plate | 220: | substrate |
| 221: | base layer | 222: | first conductive layer |
| 223: | second conductive layer | 224: | connector |
| 225: | penetrator | 226: | junction layer |
| 230: | active material layer | 260: | separator |

## Claims

1. An electrode plate (210) comprising:
a substrate (220) including a base layer (221), a first conductive layer (222), and a second conductive layer (223) disposed on upper and lower surfaces of the base layer (221); and
an active material layer (230) disposed on at least one surface of the substrate (220),
wherein the substrate (220) includes:
at least one connector (224) comprising a conductive material, the connector (224) penetrating the first conductive layer (222), the base layer (221), and the second conductive layer (223), and connecting the first conductive layer (222) and the second conductive layer (223), and
at least one penetrator (225) penetrating the connector (224).

2. The electrode plate (210) as claimed in claim 1, wherein a cross-section of the base layer (221) has a wave shape.

3. The electrode plate (210) as claimed in any of claims 1 or 2, wherein the penetrator (225) has one of a circular shape and a polygonal shape.

4. The electrode plate (210) according to any of the preceding claims, wherein the connector (224) and the penetrator (225) are multiple, and the penetrators (225) are spaced apart from each other at regular intervals.

5. The electrode plate as claimed in claim 4, wherein a distance (d2) between adjacent penetrators (225) is greater than 200 µm.

6. The electrode plate (210) according to any of the preceding claims, wherein the penetrators (225) are multiple and wherein the penetrators (225) are arranged in a configuration of one of a triangular lattice, a quadrangular lattice, and a rhombus lattice.

7. The electrode plate (210) according to any of the preceding claims, wherein the base layer (221) comprises at least one of polyethylene terephthalate, poly amide, poly imide, poly butylene terephthalate, polyethylene naphthalate, poly carbonate, polyethylene, polypropylene, polyethylene propylene, acrylo nitrile-butadiene-styrene copolymer, poly vinyl alcohol, poly styrene, poly chloride vinyl, poly vinylidene fluoride, poly tetra fluoro ethylene, poly styrene sulfonate sodium, poly acetylene, silicon rubber, poly oxy methylene, poly phenylene ether, poly phenylene sulfide, polyethylene glycol, poly sulfur nitride, poly phenylene, polypyrrole, poly aniline, polythiophene, polypyridine, cellulose, fluorine, starch, protein, epoxy resin, phenol resin, derivatives of the above-noted materials, crosslinked bodies of the above-noted materials, and copolymers thereof.

8. The electrode plate (210) according to any of the preceding claims, wherein the base layer (221) further comprises an additive, and the additive includes at least one of a metal material and an inorganic nonmetal material.

9. The electrode plate (210) according to any of the preceding claims, wherein the first conductive layer (222) and the second conductive layer (223) comprise at least one of aluminum, nickel, copper, iron, silver, stainless, and alloys thereof; and/or wherein the first conductive layer (222) and the second conductive layer (223) further comprise a carbon-based conductive material.

10. The electrode plate (210) according to any of the preceding claims, wherein the connector (224) comprises the same material as at least one of the first conductive layer (222) and the second conductive layer (223); and/or wherein the connector (224), the first conductive layer (222), and the second conductive layer (223) all comprise the same material.

11. The electrode plate as claimed in claim 1, wherein a thickness (t2) of the first conductive layer (222) and a thickness (t3) of the second conductive layer (223) is each in the range of 0.5 µm to 1.0 µm; and/or wherein a thickness (t1) of the base layer (221) is greater than 50% of a thickness (t) of the substrate (220).

12. The electrode plate (210) according to any of the preceding claims, wherein a width (d1) of an inside of the penetrator (225) is in the range of 40 µm to 60 µm.

13. The electrode plate (210) according to any of the preceding claims, wherein a thickness of the connector (224) is different from each of a thickness (t2) of the first conductive layer (222) and a thickness (t3) of the second conductive layer (223); or wherein the first conductive layer (222), the second conductive layer (223), and the connector (224) have the same thickness.

14. The electrode plate (210) according to any of the preceding claims, wherein the substrate (220) further comprises a junction layer (226) disposed at least one of between the base layer (221) and the first conductive layer (222), and between the base layer (221) and the second conductive layer (223).

15. A rechargeable battery (100) comprising:
an electrode assembly (200) including electrode plates (210), and a separator (260) between the electrode plates (210); and
a case (300) receiving the electrode assembly (200),
wherein the electrode plates (210) comprise at least one electrode plate (210) configured according to any of Claims 1 to 14.
